# EUROPEAN PATENT SPECIFICATION

(11) **EP 1 830 539 B1**
(45) Date of publication and mention of the grant of the patent: **27.08.2008**
(21) Application number: 07012301.3
(22) Date of filing: 30.06.2003
(51) Int. Cl.: H04L 29/06

(54) **Information output system**
Datenausgabesystem
Système de sortie de données

(30) Priority: 03.07.2002 JP 2002194223; 15.07.2002 JP 2002206033
(43) Date of publication of application: 05.09.2007
(62) Divisional of application: 03014862.1
(73) Proprietor: Brother Kogyo Kabushiki Kaisha, Nagoya-shi, Aichi-ken 467-8561 (JP)
(72) Inventor: Maekawa, Yohei, c/o Brother Kogyo Kabushiki Kaisha, Nagoya-shi, Aichi-ken, 467-8561 (JP); Seki, Takao, c/o Brother kogyo kabushiki Kaisha, Nagoya-shi, Aichi-ken, 467-8561 (JP); Ohara, Kiyotaka, c/o Brother Kogyo Kabushiki Kaisha, Nagoya-shi, Aichi-ken, 467-8561 (JP); Kojima, Atsushi, c/o Brother Kogyo Kabushiki Kaisha, Nagoya-shi, Aichi-ken, 467-8561 (JP)
(74) Representative: Materne, Jürgen

(56) References cited:
- EP-A- 0 899 655
- US-A- 5 991 885
- US-A- 6 047 126
- US-B1- 6 169 475

## Description

### Background of the Invention

The present invention relates to an information output system which obtains information related to devices connected with a network system and outputs the obtained information.

Recently, in accordance with the development of computer networks such as the Internet, an information output system, which obtains information from a device on the network and outputs the same, has been suggested. The information output system typically includes WWW (World Wide Web) servers containing various information, and a personal computer having software (e.g., a browsing program) for accessing the WWW servers is connected to the WWW servers through the computer network such as the Internet. A user of the personal computer searches for desired information in the WWW servers, and operates the browsing program to display the desired information on a display of the personal computer. In such a system, the user may print the information through, a printer which is also connected .to the network.

Recently, a printer implemented with a browser has been suggested. With such a printer, a user may search for desired information on the WWW server through the printer, and have the printer print out the desired information.

When the user accesses the WWW servers, the user typically uses URL (Uniform Resource Locator) . In such a system, however, the user is required to input the URL correctly. Alternatively, the user may search for a desired WEB page using search engines in order to access WEB pages containing the desired information. Such an operation is relatively troublesome for the user.

Incidentally, when there occurs a change of operation status (e.g., disorder) in the electronic device, typically, a buzzer is automatically sounded and/or an LED (Light Emitting Diode) is lit in order to indicate the status change. When such an electronic device is connected to a network system, it may be configured such that an error message is transmitted to a system administrator to notify the status change, or the error condition.

When the user knows that a certain electronic device is in error condition, the user may refer to an operation manual of the electronic device to look up how to cope with the error condition. Alternatively, the user may access a home page of the manufacture to search for the coping method. To look up the operation manual or to access the home page to search for the coping method is relatively troublesome for the user, and improvement has been desired.

From US 5,991,885 an information output system according to the preamble of claim 1 can be taken. The information output system includes a plurality of electronic devices and an information output device connected to a network system. A detecting system detects the plurality of electronic devices connected to the network system. Application of electrical power to a detected electronic device is controlled. A signal generator and a feedback analyzer are provided, wherein the signal generator receives a timing signal, a control signal, and a select signal.

From US 6,047,126 an information output system can be taken which includes an electronic device and an information output device. A link information storage stores link information for a link between two documents in a system. The link information is transmitted through a link information transmitting system.

### Summary of the invention

An information output system according to the present invention is advantageous in that necessary information can be obtained relatively easily with a simple operation.

According to an aspect of the invention, there is provided an information output system according to claim 1.

According to another aspect of the invention, there is provided an information output system including a plurality of electronic devices, a server and an information output device which are connected to a. network system and capable of communicating with each other. In this information output system, the server is provided with a detecting system that detects the plurality of electronic devices connected to the network system, and a selecting system operable by a user to select at least one device from among the plurality of electronic devices. Further, each of the plurality of electronic devices is provided with a link information storage that stores link information indicative of a location of data to be output, and a link information transmitting system that transmits the link information to the server when a : predetermined condition is satisfied. The server further includes a link information receiving system that receives the link information from the at least one device selected by the selecting system, and a transmitting system that transmits the data to be output to the information output device. Then, the data outputting device is provided with a data receiving system that receives the data to be output from the server, and an outputting system that outputs the data to be output received from the server.

Optionally, the predetermined condition relates to an operation states of each of the plurality of electronic devices. In this case, the link information may include at least one URL, and the data to be output includes WEB page data.

In a particular case, the location where the data to be output is inside each of the plurality of electronic devices.

Alternatively, the location where the data to be output is in a predetermined device connected to the network system. In this case, the data to be output may be shared among the plurality of electronic devices.

Optionally, the predetermined condition may include a predetermined change of the operation status of each electronic device. In this case, the data to be output may contain a method of coping with the predetermined condition.

Optionally, the server may include an e-mail transmitting system that generates an e-mail message having contents of the data to be output and transmits the e-mail message to at least a predetermined address.

The device and method according to the present invention can be realized when appropriate programs provided and executed by a computer. Such programs may be stored in recording medium such as a flexible disk, CD-ROM, memory cards and the like and distributed. Alternatively or optionally, such programs can be distributed through networks such as the Internet.

### Brief Description of the Accompanying Drawings

Fig. 1 shows a system configuration of a network system according to an embodiment of the invention;
Fig. 2 is a block diagram showing configurations of devices connected to the network system shown in Fig. 1;
Fig. 3 is a flowchart illustrating information output procedure;
Fig. 4 is an exemplary screen image showing a list of devices obtained with a command "Discovery" of UPnP;
Fig. 5A is an exemplary screen image showing a list of status information obtained with a command "Description" of UPnP;
Fig. 5B is an exemplary screen image showing status information corresponding to a selected one of the information as indicated in Fig. 5A;
Fig. 6 shows a system configuration of a network system according to a second embodiment of the invention;
Fig. 7 is a block diagram showing configurations of devices connected to the network system shown in Fig. 6;
Fig. 8 shows a flowchart illustrating a notification request procedure according to the second embodiment;
Fig. 9 a flowchart illustrating information output procedure according to the second embodiment;
Fig. 10 is an example of a table indicating a relationship between the statuses and URLs;
Fig. 11 shows an exemplary window for setting parameters;
Fig. 12 shows an example of a notification;
Fig. 13 shows an example of notification print and notification mail;
Fig. 14 shows an example of an output;
Fig. 15 shows a system configuration of a network system according to a third embodiment of the invention;
Fig. 16 is a block diagram showing configurations of devices connected to the network system shown in Fig. 15; and
Fig. 17 is a flowchart illustrating information output procedure according to a the third embodiment.

### Detailed Description of the Embodiments

Hereinafter, information output systems according to embodiments of the invention will be described with reference to the accompanying drawings.

### FIRST EMBODIMENT

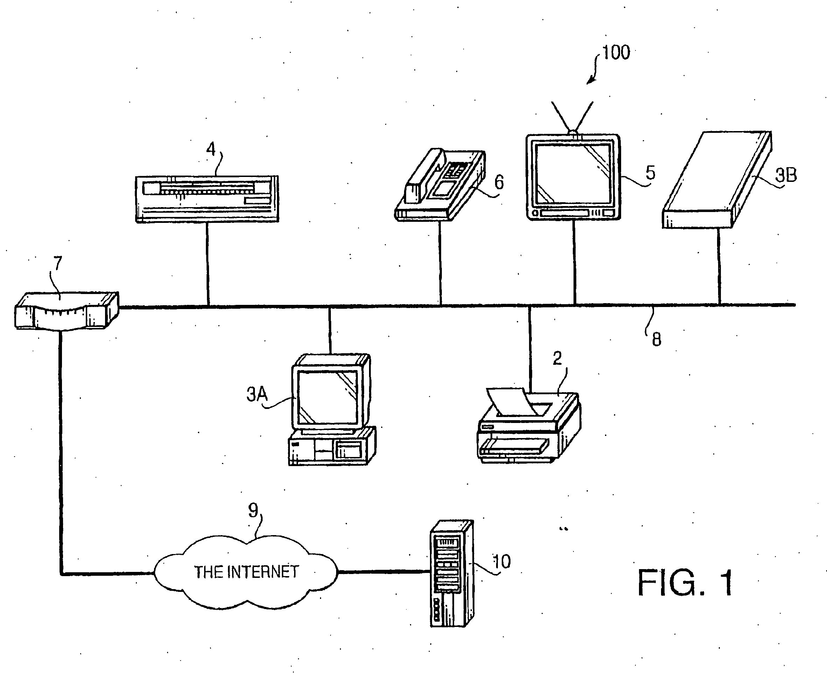

Figs. 1 shows a system configuration of a network system 1 according to a first embodiment of the invention.

The network system 100 shown in Fig. 1 includes a printer 2, a personal computer 3A, a scanner 3B, a CD (compact disc) player 4, a television (TV) set 5, a telephone 6 and a router 7, which are connected to a LAN (local area network) 8. Each device included in the network system 100 is capable of exchanging data with a server via the router 7 and the Internet 9. Communication between the devices (i.e., the printer 2, personal computer 3A, the scanner 3B, CD player 4, TV set 5 and telephone 6) included in the network system 100 is performed with use of Ethernet®, and using a communication protocol of UPnP (Universal Plug and Play) . The communication using the UPnP is a protocol based on the TCP/IP (Transmission Control Protocol/Internet Protocol), and various functions are provided between electronic devices connected through the network such as the Ethernet®. It should be noted that, in this specification, the electronic device includes electric appliances, peripherals to computers, and other similar devices, which do not have printing function, connected to the network and capable of exchanging data therebetween.

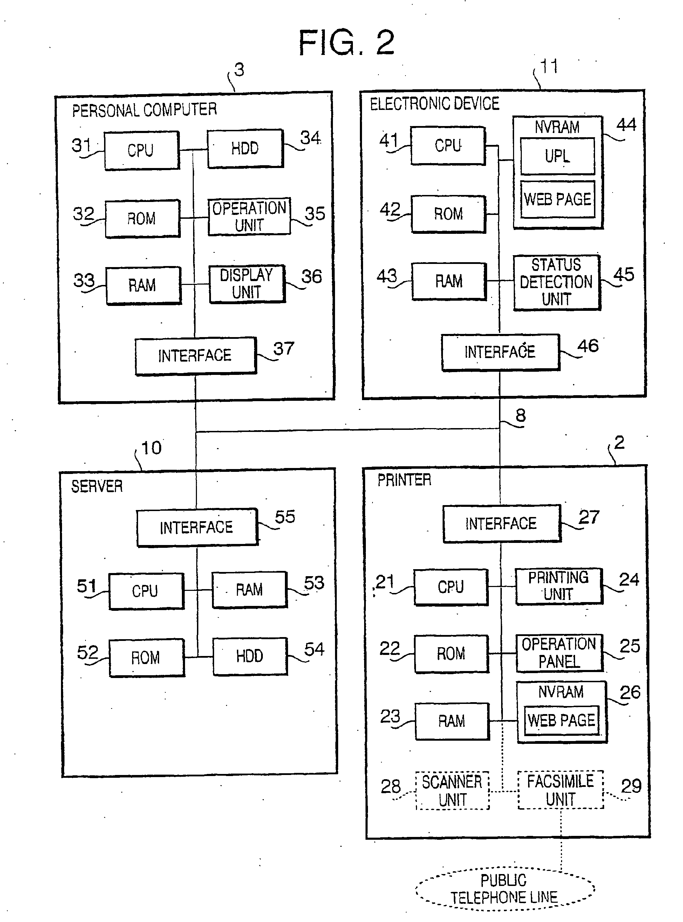

Fig. 2 is a block diagram showing configurations of devices connected to the network system 100 shown in Fig. 1. As shown in Fig. 2, the printer 2 includes a CPU (Central Processing Unit) 21, a ROM (Read Only Memory) 22, a RAM (Random Access Memory) 23, a printing unit 24, an operation panel 25, an NVRAM (Non-Volatile RAM) 26 and an interface 27. It should be noted that the printer 2 may be replaced with a multifunction device having, for example, functions of the printer, a scanner and a facsimile machine. In such a case, as shown in Fig. 2 with broken lines, the printer 2 may be a part of the multifunction device which further includes a scanner unit 28 and a facsimile unit 29 that are connected to a public telephone line.

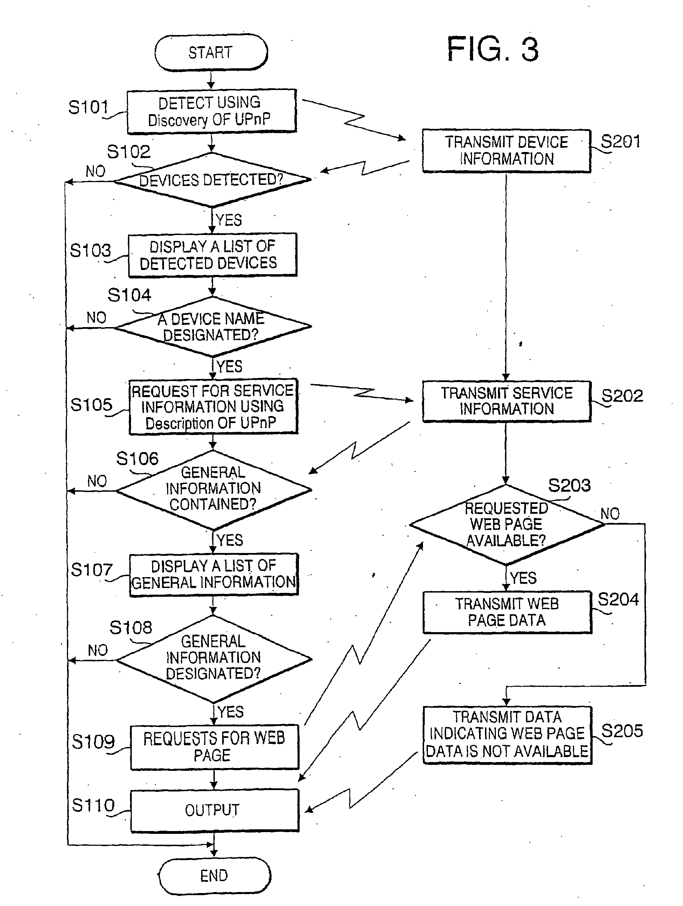

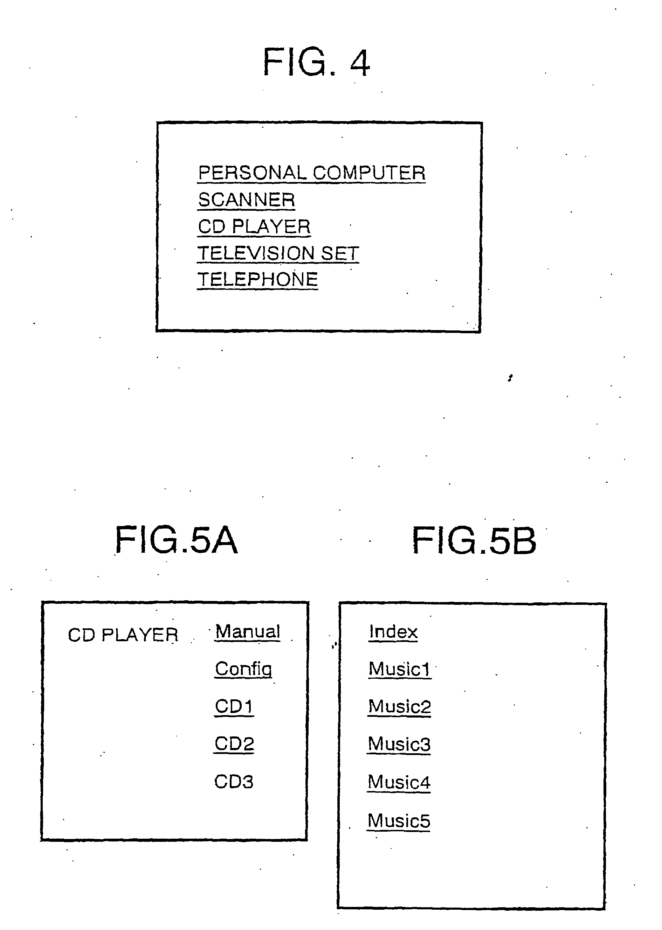

The CPU 21 executes various procedures and calculations. In particular, according to the embodiment, the CPU 21 executes an information output procedure shown in Fig. 3. In the information output procedure, the CPU 21 casts a search signal into the LAN 8 through the interface 27. Then, based on responses to the search signal from the devices on the LAN 8, the CPU 21 detects the devices connected to the LAN 8 and corresponding to the UPnP. When the devices are found, the CPU 21 displays a list of the UPnP devices (see Fig. 4) on a screen of the operation panel 25.

Next, the CPU 21 sends a request for service information (URL and/or Description of a WEB page designated by the URL) to one of the listed devices, which is designated by the user through the operation panel 25. Then, the CPU 21 receives the service information as a reply to the request from the designated device. The CPU 21 displays, in accordance with the received service information, a list of general descriptions (see Fig. 5) on the screen of the operation panel 25. Further, the CPU 21 obtains WEB page data of a URL related to one of the descriptions selected by the user, and outputs the contents of the WEB page data through the printing unit 24.

The ROM 22 is a read-only storage, which functions as a part of main memory of the printer 2. In the ROM 22, various programs including a system program to be executed by the CPU 21 are stored.

The RAM 23 is a volatile readable and writable storage, and also function as a part of the main memory of the printer 2. In the RAM 23, a work area is defined for storing intermediate operation results of data processing. The RAM 23 stores data related to UPnP devices, and URLs and descriptions corresponding to WEB pages designated by the URLs, which are obtained in the information output procedure (see Fig. 3).

The printing unit 24 provides a monochromatic or color printing function for printing letters, characters and/or images. For example, the printing unit 24 prints out the contents of a WEB page stored in an electronic devices 11 such as the scanner 3B, the CD player 4, the TV set 5 and the telephone 6 or in a server 10, under control of the CPU 21 on a recording sheet.

The operation panel 25 includes the display unit for visually indicating information, and an input unit (or an operation unit) operable by the.user. For example, the operation panel 25 may have a liquid crystal display or a plasma display as the display unit provided with a touch panel as the input unit (or operation unit).

In the information display procedure, a list of the devices compatible to the UPnP protocol found by a searching operation and a list of descriptions obtained from the respective devices by request are displayed on the display unit of the operation panel 25.

The touch panel provided to the operation panel 25 is operated by the user for selecting a desired one of the UPnP devices listed on the display unit or desired one of the descriptions listed thereon.

The NVRAM 26 is a readable and writable non-volatile memory. Even when the printer 2 is powered OFF, the data stored in the NVRAM 26 will not be deleted. The NVRAM 26 stores programs to be executed by the printer 2. Further, the NVRAM 26 stores display data (i.e., a WEB page) to be displayed on operation panel 25 and/or an display unit 36 of the personal computer 3A connected to the LAN 8. A serial number of the printer 2 is also stored in the NVRAM 26.

The interface 27 connects the printer 2 to the LAN 8 to enable the communication between the printer 2 and devices connected to the LAN 8.

The personal computer 3A includes, as shown in Fig. 2, a CPU 31, a ROM 32, a RAM 33, an HDD (Hard Disk Drive) 34, an operation unit 35, a display unit 36 and an interface 37.

The CPU 31 executes various procedures and calculations. The ROM 32 is a read-only storage, and functions as a part of a main memory of the personal computer 3A. The ROM 32 stores a system program and various other programs to be executed by the CPU 31. The RAM 33 is a readable/writable volatile memory, and also functions as a part of the main memory of the personal computer 3A. The RAM 33 includes a work area for storing intermediate calculation results of the data processing. The HDD 34 is a readable/writable storage.

The operation unit 35 is an input device of the personal computer 3A. The operation unit 35 includes a keyboard having a plurality of keys, and a pointing device such as a mouse. The display unit 36 is a device for visually indicating information, and may include a crystal liquid display or a plasma display. The liquid crystal display may include a simple matrix type display such as an STN system or a DSTN system, and an active matrix type display such as a TFT system. The interface 37 connects the personal computer 3A to the LAN 8 so as to enable the communication with respect to the printer 2 and/or electronic devices 11 through the LAN 8.

The electronic device 11 such as the scanner 3B, the CD player 4, the TV set 5 and the telephone 6 has, as shown in Fig. 2, a CPU 41, a ROM 42, a RAM 43, an NVRAM 44, a status detecting unit 45 and an interface 46. Although the scanner 3B, the CD player 4, the TV set 5 and the telephone 6 have different functions, they have a common function regarding the present invention, and only the common function will be described hereinafter for the sake of brevity.

The CPU 41 executes various processes and calculations. According to the first embodiment, the information output procedure (shown in Fig. 3) is executed by the CPU 41. The procedure will be described hereinafter. When the electronic device having the CPU 41 is the UPnP device, the CPU 41 sends device information (e.g., IP address, a name etc. of the electronic device 11) to the LAN 8 through the interface 46 in response to a Discovery command (of the UPnP protocol) transmitted by the printer 2.

Further, the CPU 41 sends, in response to the Description command (either Device Description or Service Description) of the UPnP transmitted from the printer 2, service information (e.g., URL and general information) to the LAN 8 through the interface 46.

The ROM 42 is a read-only storage, which is a part of a main memory of the electronic device 11. The ROM 42 stores various programs such as a system program to be executed by the CPU 41. The RAM 43 is a readable/writable storage, and is also a part of the main memory of the electronic device 11. The RAM 43 includes a work area for storing an intermediate result of the data processing.

The NVRAM 44 is a readable/writable storage, and the data is held even when the electronic device 11 is powered OFF. The NVRAM 44 stores programs to be executed by the CPU 41 to perform the information output procedure shown in Fig. 3. The NVRAM 44 stores an URL, and general information on a WEB page designated by the URL. In one example, the thus related URL and general information are linked using the XML (extensible Markup Language) and is stored in the NVRAM 44. The NVRAM 44 also stores the WEB page itself, which is designated by the URL. Optionally, the NVRAM 44 stores a serial number of the product (i.e., the electronic device 11).

The status detecting unit 45 is for detecting a disorder of the electronic device 11. The interface 46 connects the electronic device 11 to the LAN 8 so as to enable the electronic device 11 to communicate with the devices (e.g., the printer 2 and the personal computer 3A) connected to the LAN 8.

The server 10 shown in Fig. 1 includes, as shown in Fig. 2, a CPU 51, a ROM 52, a RAM 53, an HDD 54 and an interface 55.

The CPU 51 executes various procedures and calculations, and controls the entire operation of the server 10. The ROM 52 is a read-only storage, and constitutes a part of a main memory of the server 10. The ROM 52 stores various programs including a system program to be executed by the CPU 51. The RAM 53 is a readable/writable volatile storage, and is also a part of the main memory of the server 10. The RAM;53 includes a work area for storing intermediate result of data processing. The HDD 54 is a readable/writable storage. The interface 55 connects the server 10 to the Internet 9 so as to enable the server 10 to communicate with devices (e.g., the printer 2) connected to the Internet 9.

Next, the information output procedure of the network system 100 will be described with reference to Fig. 3.

The procedure starts when a user instructs printer 2, through the operation panel 25, to start searching. In S101, the printer 2 (i.e., the CPU 21) transmits a search signal for searching UPnP devices (e.g., the electronic devices such as the personal computer 3A and the CD player 4) connected to the LAN 8 in accordance with the Discovery command of the UPnP protocol.

In S201, the personal computer 3A, or the electronic device 11 transmits a reply signal including the device information containing the IP address and the device name to the printer 2 in response to the search signal transmitted by the printer 2. It should be noted that, among the devices connected with the LAN 8, the UPnP devices output the reply signals, while the non-UPnP devices do not output the reply signals.

In S102, the CPU 21 of the printer 2 determines whether the reply signals are received through the interface 27, i.e., whether the UpnP devices have been found. When the UPnP device has not been found (S102: NO), the information output procedure is terminated. When at least one of a plurality of UPnP devices has been found (S102 : YES), control proceeds to 5103. According to the embodiment, when at least one electronic device 11 (e.g., the personal computer 3A and the CD player 4) other than the printer 2 (the device which sent the search signal) is compatible to the UPnP protocol, the CPU 21 determines that the UPnP devices are found (S102: YES), while none of the devices except the printer 2 is not compatible to the UPnP protocol, the CPU 21 determines that the UPnP devices have not been found (S102: NO).

In S103, the CPU 21 obtains the names of the UPnP devices as found, based on the reply signals therefrom, and displays a list of the obtained device names (the names of the devices found to be UPnP compatible) on the screen of the operation panel 25. Fig. 4 shows an exemplary screen image showing the list of the devices. In this example, the personal computer 3A and the electronic devices 11 (the scanner 3B, the CD player 4, the TV set 5 and the telephone 6) are found as the UPnP devices. The thus listed device names can be selected by operating the operation panel 25.

In S104, the CPU 21 determines whether one of the listed devices displayed on the operation panel 25 is selected by the user using the operation panel 25 (e.g., a touch panel), based on the signal transmitted by the operation panel 25. When none of the device names is selected by the user (S104: NO), the user may terminate the information output procedure as a desired electronic device 11 is not included in the displayed list. For example, when a cancel key of the operation panel 25 is operated, the CPU 21 regards that the user selected none of the device names.

When one of the device names as listed is designated by the user (S104: YES), control proceeds to S105.

In S105, the CPU 21 requests the electronic device 11 designated by the user to transmit service information thereof by issuing the Description (either the Device Description or the Service Description) command in accordance with the UPnP protocol. In other words, the printer 2 requests the user-designated electronic device 11 for the URL and general information thereof.

In S202, the CPU 21 determines whether the service information transmitted from the electronic device 11, to which the request for the Description has been sent, includes the general information. When the general information is not available (S106: NO), the information output procedure is terminated. When the CPU 21 determines that the general information is included in the service information transmitted from the electronic device 11 (S106: YES), control proceeds to S107.

In S107, the CPU 21 displays a list of the general information included in the service information on the screen of the operation panel 25. Fig. 5A shows an exemplary screen image of the list of the general information. The thus displayed general information can be selected using the operation panel 25. In the example shown in Fig. 5A, the CD player 4 is selected by the user, and the service information from the CD player 4 includes general information: Manual, Config, CD1, CD2 and CD3 . According to this example, "CD1", "CD2" and "CD3" are titles of CDs inserted in the CD player 4. According to the embodiment, when the user selects one of the titles "CD1", "CD2" and "CD3" using the operation panel 25, the contents of the selected CD can be obtained. Of course, depending on the CDs loaded in the CD player 4, the contents the user obtains are different. For example, the contents of the selected CD are indicated as shown in Fig. 5B, which is a screen image displayed after the user selected one of the CDs. In this example shown in Fig. 5B, Index, and tiles of the tunes "Music1", "Music2", ... are indicated. When the user selects the Index, the CPU 21 obtains a list of tiles from the CD player 4 and prints the list of tiles of the tunes with the printing unit 24. When the user selects one of the titles of the tunes "Music1", "Music2", ... the CPU 21 obtains lyrics of the selected tune from the CD player and prints out a lyrics sheet for the selected tune with the printing unit 24.

In S108, the CPU 21 determines which one of the general information listed on the operation panel 25 is designated by the user, based on a signal transmitted from the operation panel 25. When none of the general information is selected (e.g., when the cancel key, of the operation panel 25 is operated) by the user (S108 : NO), the information output procedure is terminated since it is assumed that the general information does not include the information desired by the user. When one of the listed pieces of the general information is selected by the user (S108: YES), control proceeds to S109.

In S109, the CPU 21 transmits a path of the URL related to the general information selected by the user in S108 to the selected electronic device 11, and requests the electronic device 11 for the data of the WEB page designated by the URL (a request using an HTTP (Hyper Text Transfer Protocol)).

In S203, the CPU 41 of the electronic device 11 determines whether it contains the WEB page data designated by the URL transmitted from the printer 2, when it receives the request with the HTTP. When the CPU 41 determines that the WEB page data designated by the transmitted URL is available in the electronic device 11 (S203: YES), control proceeds to S204. When the WEB page data designated by the URL is not available (S203: NO), control proceeds to S205.

In S204, the CPU 41 of the electronic device transmits the WEB page data as requested to the printer 2 (a response using the HTTP).

In S205, the CPU 41 transmits data indicating that WEB page data as requested is not available in the electronic device 11 to the printer 2 (i.e., the response using the HTTP).

In S110, the CPU 21 outputs the contents of the WEB page transmitted from the electronic device 11 through the printing unit 24, or displays the data, which is transmitted by the electronic device 11 in S205 (i.e., the data indicating that the WEB page corresponding to the requested URL is not available), on the screen of the operation panel 25. Then, the information output procedure is terminated.

According to the above-described procedure, the user only starts searching UPnP devices, designates a desired device from the listed device name (see Fig. 4), and designates desired information from among the listed pieces of the general information (see Fig. 5A). Then, the contents of the desired WEB page can be printed on a printing sheet. Therefore, the user is not required to search for the URL and type the same, or search for the WEB page using the browsing program and inputting the keywords. Thus, with a simple operation, the user can:obtain the desired information.

Even though the electronic devices do not have display/printing function (e.g., the refrigerators), the information thereof can be obtained by the printer 2 with the above-described operation.

Further, according to the first embodiment, the printer 2 detects the electronic devices 11 capable of communicating with the printer 2, and displays a list of such devices 11 as shown in Fig. 4. Then, the printer 2 requests the electronic device 11 designated by the user for the service information (i.e., the URL and the general information). Because of this configuration, electronic devices which cannot communicate with the printer 2 will not be designated by the user, and thus an error condition such that the printer 2 requests the electronic device unable to communicate with the printer 2 for the service information. In other words, it is ensured that the request for the service information is sent to the electronic devices 11 which can communicate with the printer 2 and thus can transmit the service information to the printer 2.

Furthermore, according to the first embodiment, the WEB page data designated by the URL is stored within the electronic device 11. If the WEB page data is stored in a device, an access to which is restricted, there may be a case where the printer 2 cannot access the device, and thus cannot obtain the WEB page data. According to the first embodiment, since the WEB page data corresponding to the URL is stored in the electronic device 11 itself, it is ensured that the printer 2 can obtain the WEB page data, and print the same.

Further, according to the first embodiment, a list of the general information is displayed on the screen of the operation panel 25 (see Fig. 5A), and the user designates one of the listed information. Then, the WEB page designated by the URL related to the user-designated general information is printed out. Therefore, unnecessary WEB page may not be printed, which prevents unnecessary consumption of recording sheets.

Still further, according to the first embodiment, when a WEB page is designated, not the URL but the general information indicative of the generalized contents of the WEB page is used, the user can easily find the desired WEB page based on the general information and designate the same.

According to the first embodiment, since the UPnP compatible electronic devices 11 are employed, system development can be carried on easily.

In the above-described embodiment, the WEB page is stored in each electronic device 11. This can be modified such that the WEB pages for some of or all of the electronic devices 11 are stored in an area, e.g., the HDD 54 of the server 10, where the electronic devices 11 share the WEB pages. With such a configuration, the update and/or maintenance of the WEB pages may be simplified. For example, when the WEB page is stored in a management server of a manufacturer of a certain product, and if new supplies and/or new error handling methods are to be announced, only by updating the WEB page at the management server, each printer 2 can print outs the contents.

Further, in the first embodiment, the contents of the WEB page is printed out using the printer 2. However, this can be modified such that part of or all of the contents is displayed on the screen of the display unit. For example, the information output procedure shown in Fig. 3 is executed by the personal computer 3A, and the contents of the obtained WEB page may be displayed on the display unit 36.

Furthermore, the contents output by the printer 2 may be differentiated based on the status of the electronic device 11. For example, the URL stored in the NVRAM 44 of the electronic device 11 is modified based on the operational status of the electronic device 11 (e.g., detection results of the status detecting unit 45). For another example, the contents of the WEB page may be modified in accordance with the operational status of the electronic device 11.

In the first embodiment, the general information for the detected electronic devices 11 is displayed. Alternatively or optionally, a list of the URLs may be displayed.

As described above, according to the first embodiment, the printer 2 requests the electronic devices 11 for link information (e.g., URLs), and obtains the same. Next, further information (e.g., the WEB page data) is obtained from the electronic device 11 using the previously obtained link information, and then outputs the contents of the further information. Thus, the user need not perform a complicated operation (e.g., inputting of the URL), and the necessary information can be obtained easily.

### SECOND EMBODIMENT

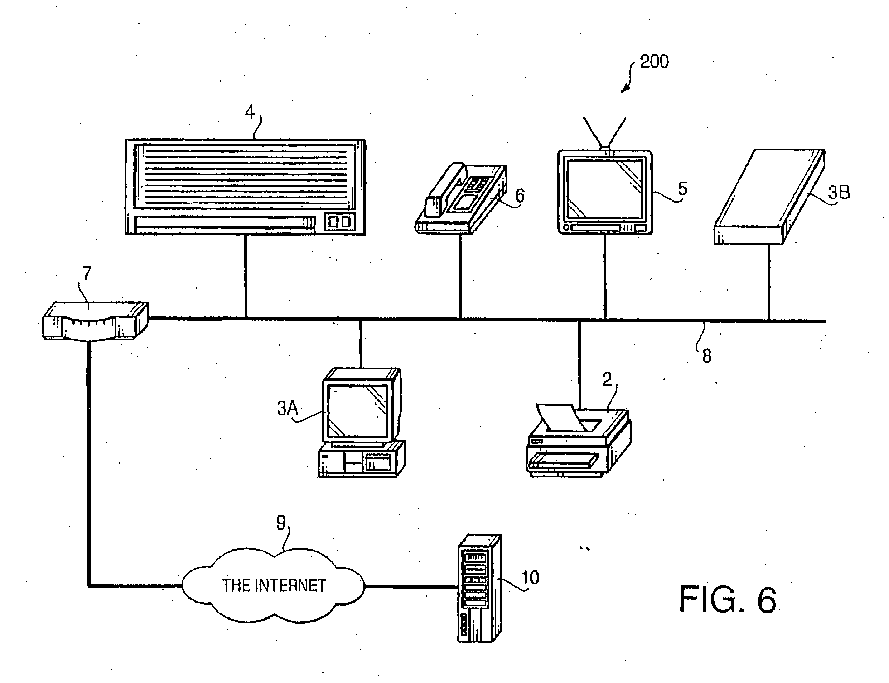

Figs. 6 shows a configuration of a network system 200 according to a second embodiment of the invention.

The network system 200 shown in Fig. 6 is similar to the system 100 shown in Fig . 1, which includes a printer 2, a personal computer 3A, an air conditioner 4, a television (TV) set 5, a telephone 6, a router 7 and a scanner 3B, which are connected to a LAN (local area network) 8. Each device included in the network system 200 is capable of exchanging data with a server 10 via the router 7 and the Internet 9. Communication between the devices (i.e., the printer 2, the personal computer 3A, the scanner 3B, the air conditioner, the TV set 5 and the telephone 6) included in the network system 200 is performed with use of Ethernet®, and using a communication protocol of UPnP (Universal Plug and Play).

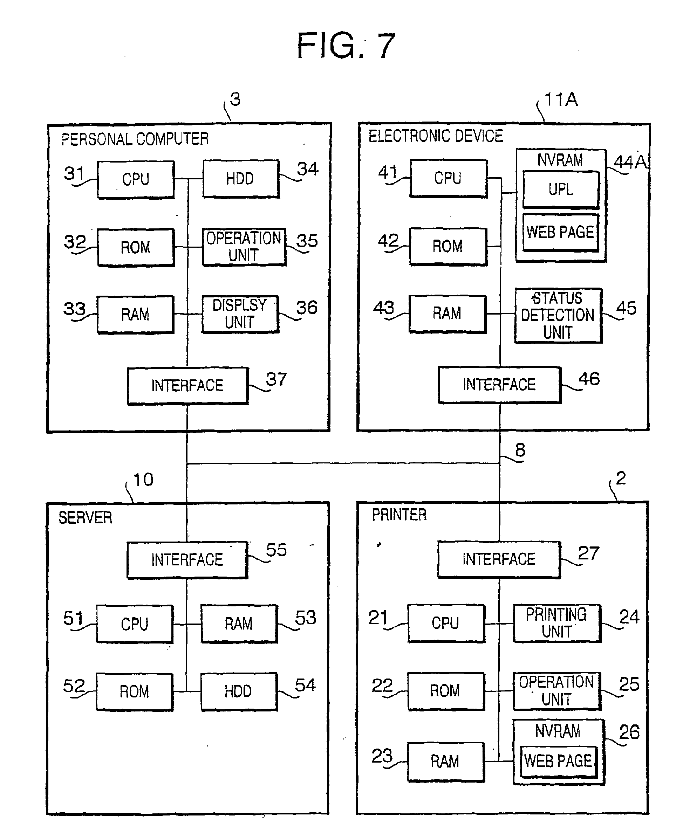

Fig. 7 is a block diagram showing configurations of devices connected to the network system 200 shown in Fig. 6. As shown in Fig. 7, the printer 2 includes a CPU (Central Processing Unit) 21, a ROM (Read Only Memory) 22, a RAM (Random Access Memory), a printing unit 24, an operation panel 25, NVRAM (Non-Volatile RAM) 26 and an interface 27.

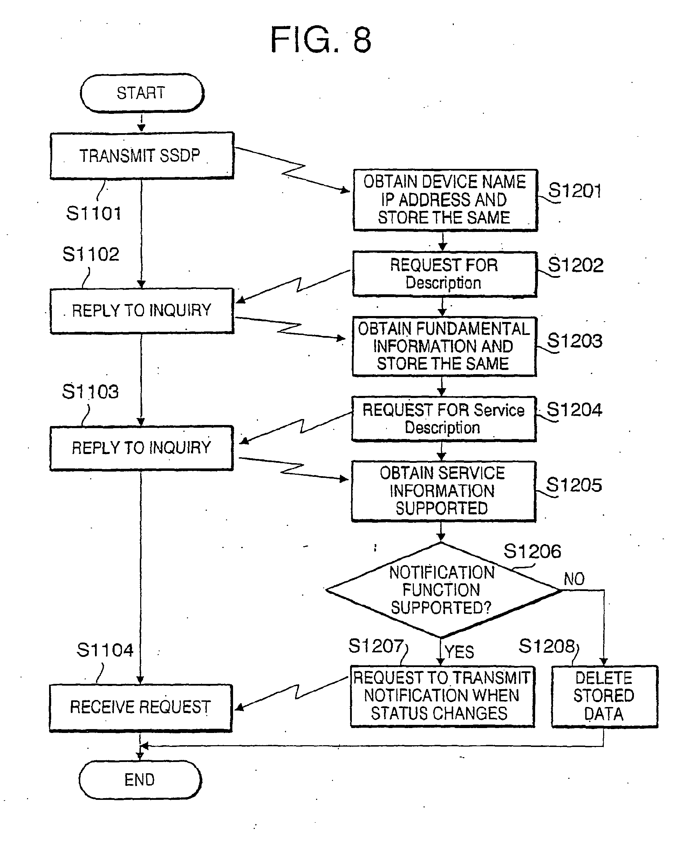

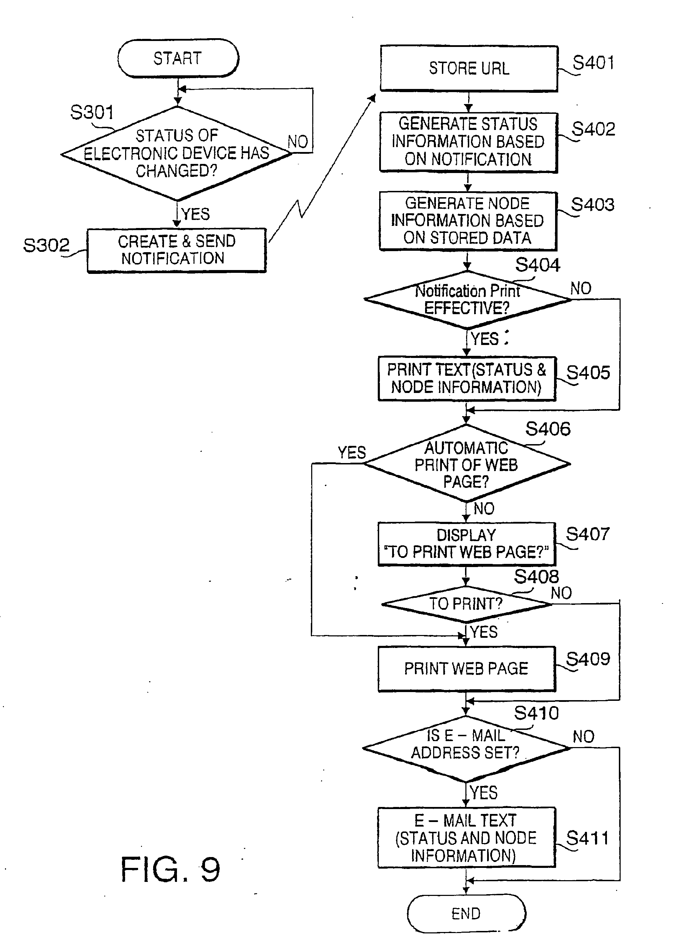

The CPU 21 executes various procedures and calculations. In particular, according to the embodiment, the CPU 21 executes a notification request procedure shown in Fig. 8, and an information output procedure shown in Fig. 9. In the notification request procedure, the CPU 21 requests each of the electronic devices (i.e., the printer 2, the personal computer 3A, the scanner 3B, the air conditioner 4, the TV set 5 and the telephone 6) to output a notification when an operation status thereof changes. In the information output procedure, the CPU 21 displays information related to the status change when the status of the electronic device has changed.

The notification request procedure is briefly described. When a UPnP device (i.e., the electronic device compatible to the UPnP) is newly connected to the LAN 8, the CPU 21 detects a signal in accordance with an SSDP (Simple Service Discovery Protocol) issued by the newly connected UPnP device. Based on the signal under the UPnP, the CPU 21 obtains an IP address and a name of the UPnP device. Then, the CPU 21 inquires the UPnP device for a Device Description thereof, and obtains fundamental information (e.g., an installation location, serial number etc.) based on the response to the inquiry. Further, the CPU 21 inquires the device for a Service Description, and from the reply thereto, the CPU 21 obtains the service information (e.g., Notification function) an electronic device 11A supports. Next, the CPU 21 requires the electronic devices 11A supporting the notification function to output the notification when the operation status of the electronic device 11A has changed (e.g., when an error has occurred).

The information output procedure (see Fig. 9) will be briefly described.

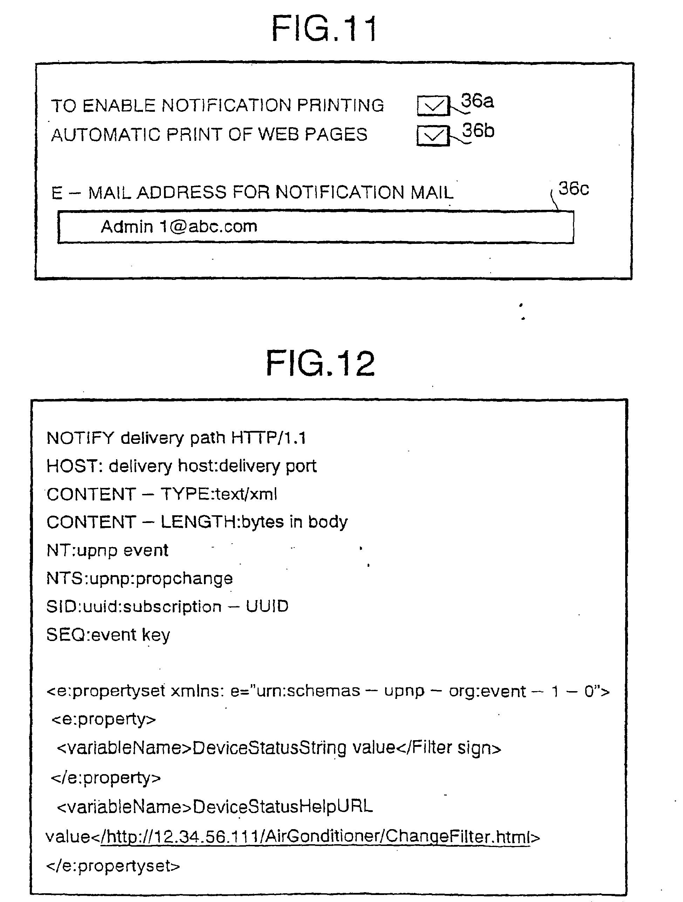

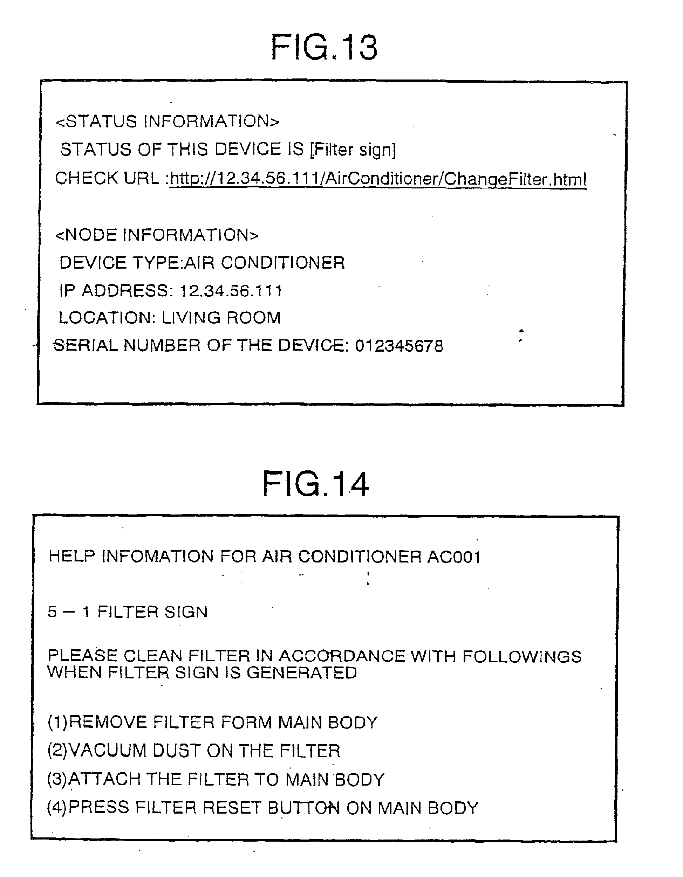

When the CPU 21 receives a notification including link information (e.g., URL) for a WEB page related to the status change from the UPnP device, the CPU 21 temporarily stores the URL (link information) included in the notification in the RAM 23. Then, based on the SSDP, preliminarily obtained information in response to the inquiry for the Device Description and the notification, the CPU 21 generates a text (a'text for the notification print and/or a text for the notification mail: see Fig. 13) . The CPU 21 controls the printing unit 24 to print out the text for notification print, and controls interface 27 to send an e-mail message containing the text for the notification mail to a predetermined user (e.g., a system administrator). According to the second embodiment, the above functions of printing and sending the e-mail message are performed when check boxes of a window as shown in Fig. 11 are preliminarily checked, which will be described later.

Further, the CPU 21 obtains a WEB page related to the status change of the electronic device 11A from the NVRAM 44 of the electronic device 11A that has sent the notification, based on the URL temporarily stored in the RAM 23, and controls the printing unit 24 to print out the contents of the WEB page (see Fig. 14).

It should be noted that, according to the second embodiment, the contents of the WEB page is printed when a check box for "AUTOMATIC PRINTOUT OF WEB PAGE" of the setting window (see Fig. 13) has been checked in advance by the system administrator, or temporarily checked by the user (S407 and S408). According to the second embodiment, the WEB page is obtained using the HTTP.

The ROM 22 is a read-only storage, which functions as a part of a main memory of the printer 2. In the ROM 22, various programs including a system program to be executed by the CPU 21 are stored.

The RAM 23 is a volatile readable and writable storage, and also function as a part of the main memory of the printer 2. In the RAM 23, a work area is defined for storing intermediate operation results of data processing.

The printing unit 24 provides a monochromatic or color printing function for printing letters, characters and/or images. For example, the printing unit 24 prints out the text for the notification print (see Fig. 13) and the contents of a WEB page (see Fig. 14) on a recording sheet.

The operation panel 25 includes the display unit for visually indicating information, and the input unit operable by the user. For example, the operation panel 25 may have a liquid crystal display or a plasma display as the display unit provided with a touch panel as the input unit (or operation unit).

If the above-described check bpx for the "AUTOMATIC PRINTOUT OF THE WEB PAGE" is not checked, the CPU 21 controls the operation panel 25 to display a window inquiring the user to select whether the contents of the WEB page designated by the URL included in the notification received from the electronic device 11A (S407 and S408) . When such a window is displayed, the' user designate to print or not using the touch panel provided to the operation panel 25.

The NVRAM 26 is a readable and rewritable memory, and even when the printer 2 is powered OFF, the data will not be deleted. The NVRAM 26 stores programs to be executed by the CPU 21, including the programs for the notification request procedure ad the information output procedure. Further, the NVRAM 26 stores setting parameters (e.g., a flag for the notification print, a flag for the automatic WEB page printing, an e-mail address to which the notification mail is sent). The NVRAM 26 further stores display data (i.e., a WEB page) to be displayed on operation panel 25 and/or the display unit 36 of the personal computer 3A connected through the LAN 8. A serial number of the printer 2 is also stored in the NVRAM 26.

The interface 27 connects the printer 2 to the LAN 8 to enable the communication between the printer and devices connected through the LAN 8.

The personal computer 3A includes, as shown in Fig. 7, a CPU 31, a ROM 32, a RAM 33, a HDD (Hard Disk Drive) 34, an operation unit 35, a display unit 36 and in interface 37.

The CPU 31 executes various procedures and calculations. The ROM 32 is a read-only storage, and functions as a part of a main memory of the personal computer 3A. The ROM 32 stores a system program and various other programs to be executed by the CPU 31. The RAM 33 is a readable/writable volatile memory, and also functions as a part of the main memory of the personal computer 3A. The RAM 33 includes a work area for storing intermediate calculation results of the data processing. The HDD 34 is a readable/writable storage.

The operation unit 35 is an input device of the personal computer 3A . The operation unit 35 includes a keyboard having a plurality of keys, and a pointing device such as a mouse. The display unit 36 is a device for visually indicating information, and may include a crystal liquid display or a plasma display. The liquid crystal display may include a simple matrix type display such as an STN system or a DSTN system, and an active matrix type display such as a TFT system. The parameter setting windows as shown in Fig. 11 is displayed on the display unit 36. In the parameter setting window, a check box 36a and a string of letters "Enable Notification Print", a check box 36b and a string of letters "Enable Automatic Print of WEB page", and an input box 36c and a string of letters "E-mail Address for Notification Mail" are indicated.

The system administrator can make the "Notification Print" and the "Automatic WEB- Page Printing" effective by checking, with use of the operation unit 35, the check-boxes 36a and 36b, respectively. Further, the system administrator may input the address of the e-mail message in the input box 36c using the operation unit 35. The setting/address input by the system administrator is transmitted from the personal computer 3A to the printer 2. Alternatively or optionally, the setting window may be displayed on the display unit of the operation panel 25 of the printer 2.

The interface 37 connects the personal computer 3A to the LAN 8 so as to enable the communication with respect to the printer 2 and/or electronic devices 11A through the LAN 8.

The electronic device 11A such as the scanner 3B, the air conditioner 4, the TV set 5 and the telephone 6 has, as shown in Fig. 7, a CPU 41, a ROM 42, a RAM 43, an NVRAM 44, a status detecting unit 45A and an interface 46. Although the scanner 3B, the air conditioner 4, the TV set 5 and the telephone 6 have different functions, they have a common function regarding the present invention, and only the common function will be described hereinafter for the sake of brevity.

The CPU 41 executes various processes and calculations. According to the second embodiment, the CPU 41 executes the notification request reply procedure (shown in Fig. 8) and the information output procedure (shown in Fig. 9).

The notification request procedure (Fig. 8) is briefly described. When the electronic device 11A is newly connected to the LAN 8, the CPU 41 transmits the SSDP (i.e., advertises that the electronic device 11A is on the LAN 8). Then, if the CPU 41 receives the inquiry for the Device Description from the printer 2, the CPU 41 transmits the fundamental information (e.g., the location and the serial number) to the printer 2 in response to the inquiry. Thereafter, in response to the inquiry for the Service Description from the printer 2, the CPU 41 transmits the service information (e.g., Notification function) to the printer 2. If the electronic device 11A supports the notification function, the printer requires the electronic device 11A to issue the notification when the operation status of the electronic device 11A changes (e.g., when a disorder occurs), and the CPU 41 stores a setting to output the notification when the status has changed in the NVRAM 44.

The information output procedure executed by the CPU 41 will be briefly described. In the electronic device 11A supporting the notification function, when the status detecting unit 45 detects a change of the operation status of the electronic device 11A, the CPU 41 transmits a notification including the URL designating the WEB page related to the change of the status to the printer 2. Thereafter, in response to the request by the printer 2 for the WEB page designated by the URL (i.e., HTTP request), the CPU 41 transmits the WEB page data to the printer as the HTTP response.

The ROM 42 is a read-only storage, which is a part of a main memory of the electronic device 11A. The ROM 42 stores various programs such as a system program to be executed by the CPU 41. The RAM 43 is a readable/writable storage, and is also a part of the main memory. The RAM 43 includes a work area for storing an intermediate result of the data processing.

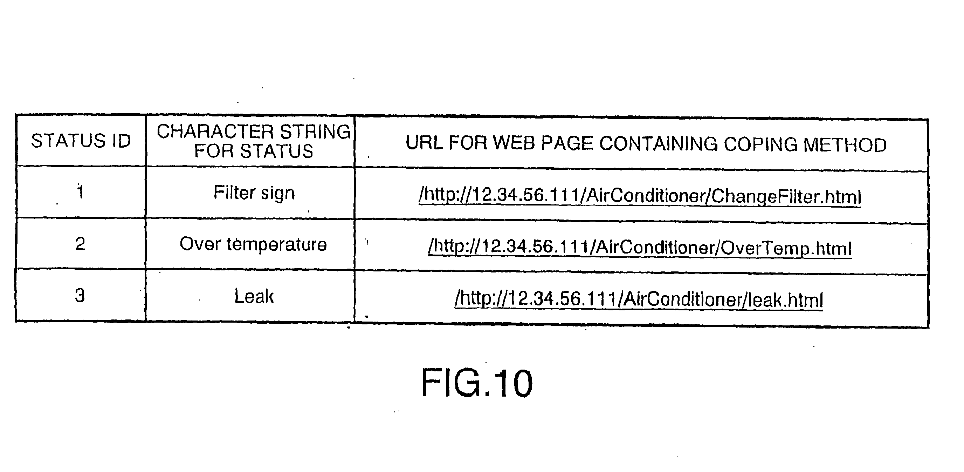

The NVRAM 44A is a readable/writable non-volatile storage, and accordingly, the data is not deleted even when the electronic device 11A is powered OFF. The NVRAM 44 stores programs to be executed by the CPU 41 to perform the notification request reply procedure shown in Fig. 8, and the information output procedure shown in Fig. 9. The NVRAM 44A stores a table storing a character string representing the status ID and the operation status in relation with the URLs designating the WEB pages containing descriptions of coping methods for respective statuses. An example of such a table is indicated in Fig. 10, which shows an example of the table for the air conditioner 4. The NVRAM 44A also stores the URLs and the WEB pages respectively designated by the URLs. Optionally, the NVRAM 44A stores a serial number of the electronic device 11A.

The status detecting unit 45 is for detecting a status change (e.g., abnormal condition such as disorder) of the electronic device 11A. The interface 46 connects the electronic device 11A to the LAN 8 so as to enable the electronic device 11A to communicate with the devices (e.g., the printer 2 and the personal computer 3A) connected to the LAN 8.

The server 10 shown in Fig. 6 includes, as shown in Fig. 7, a CPU 51, a ROM 52, a RAM 53, an HDD 54 and an interface 55.

The CPU 51 executes various procedures and calculations, and controls the entire operation of the server 10. The ROM 52 is a read-only storage, and constitutes a part of a main memory of the server 10. The ROM 52 stores various programs including a system program to be executed by the CPU 51. The RAM 53 is a readable/writable volatile storage, and is also a part of the main memory of the server 10. The RAM 53 includes a work area for storing intermediate result of data processing. The HDD 54 is a readable/writable storage. The interface 55 connects the server 10 to the Internet 9 so as to enable the server 10 to communicate with devices (e.g., the printer 2) connected to the Internet 9.

The notification transmitted from the electronic device 11A to the printer 2 will be described with reference to Fig. 12, which shows an example of the notification.

A portion starting with "<e:property>" and the following part is the enhanced portion with respect to a conventional notification using the UPnP protocol. In the enhanced portion, a character string (e.g., Filter sign) representing the status of the electronic device 11A and the URL (e.g., </http://12.34.56.111/AirConditioner/ChangeFilter.html>) designating a WEB page where the coping method is described are indicated.

The text for the Notification print and the Notification mail will be described with reference to Fig. 13, which show an example of such a text. In the status information indicated in Fig. 13, the character string indicating the status which is included in the notification (see Fig. 12) and the URL (e.g. , </http://12.34.56.111/AirConditioner/ChangeFilter.html>) for the WEB page containing the coping method are included. In this example, the URL is linked to the WEB page. In the node information indicated in Fig. 13, the SSDP, a device type (i.e., the device name) obtained via the Device Description, the IP address, a location (the installation location) and the serial number of the electronic device 11A are included.

Next, the notification request procedure executed in the network system 200 will be described with reference to Fig. 8, which shows a flowchart thereof.

In S1101, the electronic device 11A newly connected to the LAN 8 outputs the SSDP ton the LAN8 under control of the CPU 41.

In S1201, upon detection of the SSDP, the CPU 21 of the printer 2 obtains the IP address and device name in accordance with the SSDP, and stores the obtained data in the RAM 23.

In S1202, the printer 2 requests the newly connected electronic device 11A to send the fundamental information (the installation location and the serial number) in accordance with the Device Description of the UPnP.

In S1102, in response to the inquiry of the Device Description from the printer 2, the electronic device 11A transmits the fundamental information to the printer 2.

In S1203, the printer 2 receives the fundamental information from the electronic device 11A, and the CPU 21 stores the fundamental information in relation with the IP address or the device name obtained in S1201.

In S1204, the printer 2 requests the newly connected electronic device 11A to send the service information (e.g., the notification function) to the printer 2 in accordance with the Service Description of the UPnP.

In S1103, in response to the inquiry of the Service Description from the printer 2, the electronic device 11A transmits the service information supported by the electronic device 11A to the printer 2. If the electronic device 11A supports the notification function, the service information transmitted to the printer includes the data indicating that the notification function is supported.

In S1205, the printer 2 obtains the service information from the electronic device 11A to which the inquiry for the Service Description was sent.

In S1206, the CPU 21 determines whether the newly connected electronic device 11A supports the notification function based on the service information obtained from the electronic device 11A. When the CPU 21 determines that the electronic device 11A supports the notification function (S1206: YES), control proceeds to S1207. When the CPU 21 determines that the electronic device 11A does not support the notification function (S1206: NO), control proceeds to S1208.

In S1207, the printer 2 requests the newly connected electronic device 11A to transmit the notification when the operation status is changed (e.g., when disorder occurs). In this case, the CPU 21 remains the device name, IP address, install location and serial number stored. The items (i.e., the device name, IP address, install location and serial number) are used when the node information of the text (i.e., text for the notification print or text for the notification mail) is generated (see Fig. 13).

In S1208, the CPU 21 deletes the data (i.e., the device name, IP address, install location and serial number) stored in S1201 and S1203, and terminates the notification request procedure.

In S1104, the newly connected electronic device 11A receives the request for transmission of the notification when the status is changed, and the CPU 41 execute setting for the notification and the notification request procedure is terminated.

Next, the information output procedure of the network system 200 according to the second embodiment will be described with reference to Fig. 9.

In S301, the CPU 41 of the electronic device 11A supporting the notification function determines whether the operating status has changed in accordance with the output of the status detecting unit 45. When the CPU 41 does not determine that the status has changed (S301: NO), the CPU 41 keeps monitoring the status change of the electronic device 11A. If the CPU 41 determines that the status has changed (S301: YES), control proceeds to S302.

This determination is made be examining whether a predetermined condition is satisfied or not. Generally, the predetermined condition includes at least one of: a case where the electronic device 11A is in an error state; a case where a consumable member of each electronic device 11A is less than a predetermined amount; and a case where a replacement member of each electronic device 11A are required to be replaced. The status detecting unit 45 monitors the above condition continuously, and determines whether one of such conditions is satisfied.

In S302, the CPU 41 of the electronic device generates the notification as exemplified in Fig. 12 based on the detection result of the status detecting unit 45 and the contents of the table as exemplified in Fig. 10, and transmits the notification to the printer 2.

In S401, when the printer 2 receives the notification from the electronic device 11A whose status, has changed, the CPU 21 stored the URL included in the received notification in the RAM 23 temporarily.

In S402, the CPU 21 generates status information for the text of the notification print and notification mail based on the DeviceStatus String value and Device StatusHelpURL value included in the notification (see Figs. 12 and 13).

In S403, the CPU 21 generates the node information (see Fig. 13) for the text of the notification print and notification mail based on the device name and IP address stored in S1201 and the installation location and serial number stored in S1203.

With the steps S402 and S403, the text of the notification print and the notification mail is generated as shown in Fig. 13.

In S404, the CPU 21 determines whether the check box 36a for enabling the notification print has been checked. That is, the CPU 21 determines whether it is set that the notification is printed. When the CPU 21 determines that such a setting has not been made (S404: NO), since the text, which is generated in S402 and S403 need not be printed by the printing unit 24, control proceeds to S406. When the such a setting has been made (S404 : YES), control proceeds to S405.

In S405, the CPU 21 controls the printing unit 24 to print the text, which is generated in S402 and S403 and includes the status information and the node information, on the recording sheet.

In S406, the CPU 21 determines whether the check box 36b for enabling the automatic printing of the WEB page has been checked, that is, the CPU 21 determines whether the setting for the automatic printing of the WEB page has been made. When the automatic print setting has been made (S406: YES), control proceeds to S409. When such a setting has not been made (S406: NO), control proceeds to S407.

In S407, the CPU 21 displays a message "TO PRINT WEB PAGE?" on the display unit of the operation panel 25 together with "YES" and "NO" to be selected by the user.

In S408, the CPU 21 determines whether the user selects, with use of the operation panel 25, to print the WEB page. When the CPU 21 determines that the user selects "NO" , i.e., the user does not intend to print the WEB page (S408: NO), control proceeds to S410 since the WEB page need not be printed. When the user selects to print the WEB page (S408: YES), control proceeds to S409.

In S409, the CPU 21 obtains the WEB page from the NVRAM 44 of the electronic device 11A that has transmitted the notification based on the URL temporarily stored in the RAM 23 in S401. Then, the CPU 21 controls the printing unit 24 to print out the thus obtained WEB page (see Fig. 9) on the recording sheet.

In S410, the CPU 21 determines whether the e-mail address has been input in the input box 36c in the setting window shown in Fig. 11. That is, the CPU 21 determines whether the e-mail address to which the notification mail is sent has been set. When the CPU 21 determines that the e-mail address has been set (S410: YES), control proceeds to S411. When the CPU 21 determines that the e-mail address has not been set (S410: NO), the information output procedure is terminated.

In S411, the CPU 21 transmits the text of the notification mail to the e-mail address set by the system administrator, and terminates the information output procedure. The system administrator recognizes the change of status such as the disorder of the electronic device 11A when the text of the notification mail is received.

In the above described network system 200 according to the second embodiment, when the status change of the electronic device 11A has occurred, the notification is transmitted from the electronic device 11A, which is realized using the UPnP function. Accordingly, the setting can be made easily.

Further, if there is a status change in the electronic device 11A, the notification including the URL corresponding to the change of the status is transmitted from the electronic device 11A to the printer 2. The printer 2 obtains the WEB page containing the coping method for the change of the status of the electronic device 11A based on the URL included in the notification. Then, the printer 2 prints our the WEB page as obtained. Accordingly, the user need not search for a URL or directly input the URL to cope with the change of the status, or need not search for a WEB page containing the coping method for the status change of the electronic device 11A. As described above, according to the second embodiment, the user can obtain the coping method for the status change of the electronic device 11A with a simple operation.

Further, when the automatic printing of the WEB page has not been set (i.e., the check box 36a of the window shown in Fig. 11 has not been checked), the user can select whether the WEB page is to be printed. Accordingly, unnecessary WEB page will not be printed, and the unintended consumption of the recording sheet can be prevented.

Furthermore, the text of the notification mail is sent to a designated user, the designated user can recognize the change of the status at an early stage, and cope with such a status change promptly.

If the WEB page data is stored in a device, to which the access of the users are restricted, the printer may not; obtain the WEB page. However, according to the second embodiment, since the WEB page data is stored in the electronic device 11A, it is ensured that the printer 2 can obtain the WEB page data.

Further, the system employs the UPnP compatible devices, system development is relatively easy.

### THIRD EMBODIMENT

Hereinafter, a network system 300 according to a third embodiment of the invention will be described. In the description on the third embodiment, different portions with respect to the second embodiment will be mainly explained.

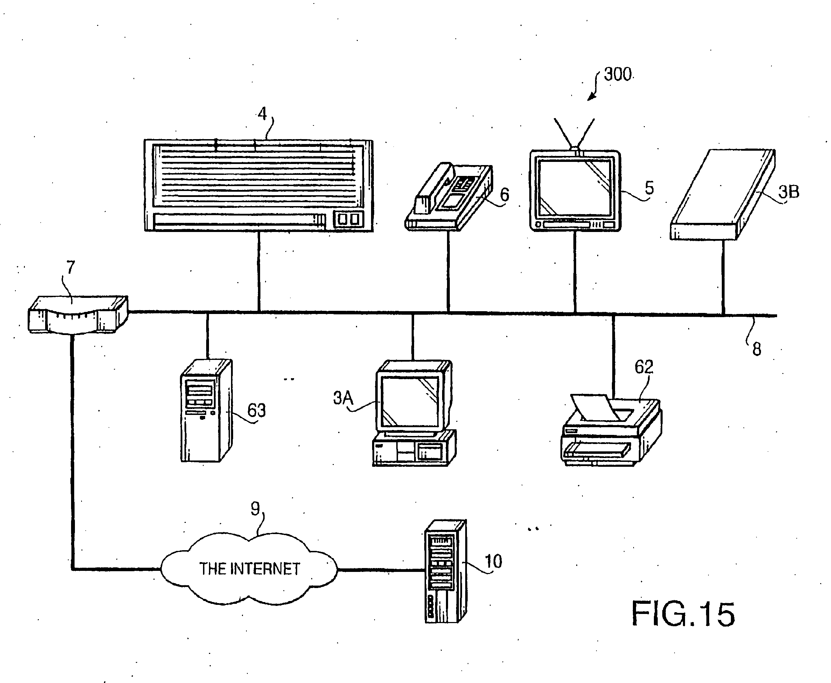

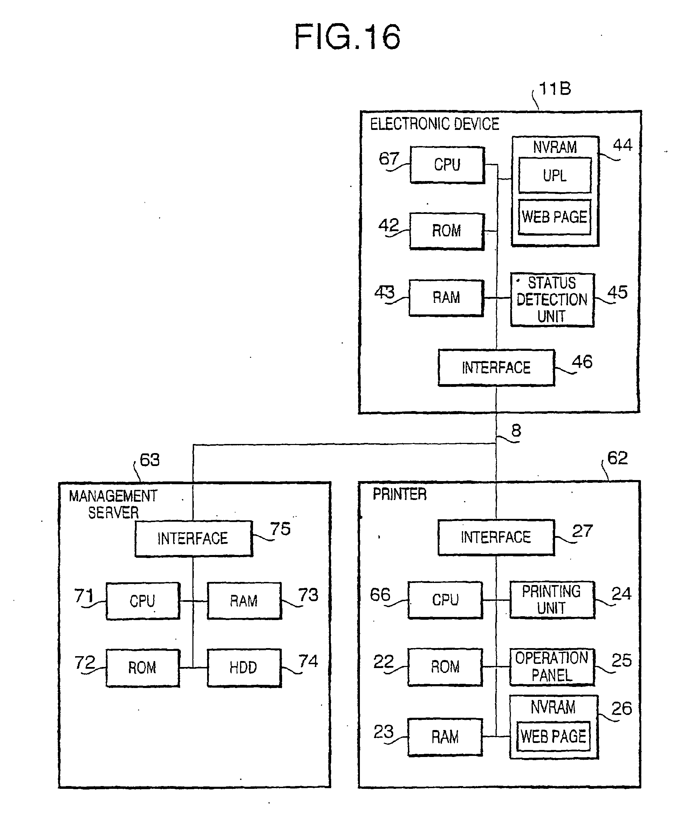

Fig. 15 shows a configuration of the network system 300 according to the third embodiment, and Fig. 16 is a block diagram showing the configuration of each of the devices connected to the network system 300.

The network system 300 shown in Fig. 15 includes a printer 62, a personal computer 3A, a scanner 33, an air conditioner 4, a television set 5, a telephone 6, a management server 63 and a router 7, which are connected to a LAN 8. The personal computer 3A according to the third embodiment transmits the setting of "Automatic print of WEB page" which has been set in the setting window to the printer 62, and the e-mail address to the management server 63.

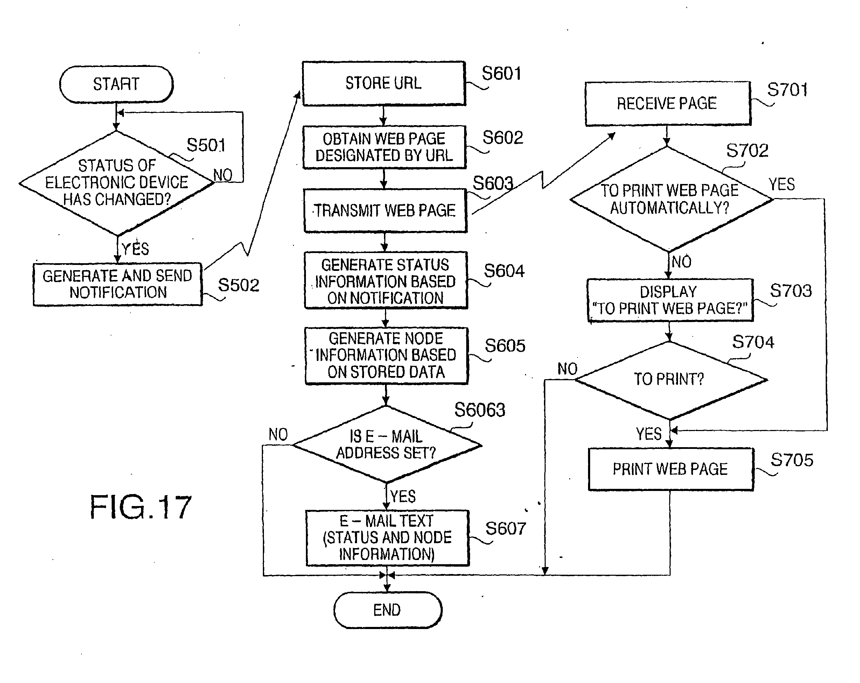

The printer 62 includes, as shown in Fig. 16, a CPU 66, a ROM 22, a RAM 23, a printing unit 24, an operation panel 35, an NVRAM 26 and an interface 27. The NVRAM 26 stores programs including one for executing an information output procedure (see Fig. 17).

The CPU 66 executes various procedures and calculations, and control the entire operation of the printer 62. In particular, according to the third embodiment, the CPU 66 executes an information output procedure shown in Fig. 17. In the information output procedure, the CPU 66 receives an WEB page transmitted from the management server 63, and controls the printing unit 24 to print the contents of the received WEB page. An example of the WEB page is indicated in Fig. 14.

The electronic device 11B such as the scanner 3B, the air conditioner 4, the TV set 5 and the telephone 6 has, as shown in Fig. 16, a CPU 67, a ROM 42, a RAM 43, an NVRAM 44, a status detecting unit 45 and an interface 46. The NVRAM 44 stores programs to be executed by the CPU 21 to perform an notification request procedure (see Fig. 8), and an information output procedure (see Fig. 17) . According to the third embodiment, the notification request procedure is performed between the management server 63 and the electronic devices 11B (i.e., the scanner 3B, the air conditioner 4, the TV set 5 and the telephone 6), which is different from the second embodiment in which the notification request procedure is performed between the printer and the electronic device 11A.

The CPU 67 executes various processes and calculations, and controls the entire operation of the electronic device 11B. According to the third embodiment, the CPU 67 executes the notification request procedure (shown in Fig. 8) and the information output procedure (shown in Fig. 17).

The notification request procedure (Fig. 8) is briefly described. When the electronic device 11B is newly connected to the LAN 8, the CPU 67 transmits the SSDP. Then, if the CPU 67 receives the inquiry for the Device Description from the management server 63, the CPU 67 transmits the fundamental information (e.g., the installation location and the serial number) to the management server 63 in response to the inquiry. Thereafter, in response to the inquiry for the Service Description from the management server 63, the CPU 67 transmits the service information (e.g., Notification function) to the management server 63. If the electronic device 11B supports the notification function, the management server 63 requires the electronic device 11B to issue the notification when the operation status of the electronic device 11B changes (e.g., when a disorder occurs), and the CPU 67 stores a setting to output the notification when the status has changed in the NVRAM 44. It should be noted that this procedure is similar to that performed in the second embodiment between the printer 2 and the electronic device 11A except that the procedure is performed between the management server 63 and the electronic device 11B, and accordingly, a detailed description thereof will not be repeated.

The information output procedure executed by the CPU 67 will be briefly described. In the electronic device 11B supporting the notification function, if the status detecting unit 45 detects a change of the operation status of the electronic device 11B, the CPU 67 transmits a notification including the URL designating the WEB page related to the change of the status to the management server 63. Thereafter, in response to the request by the management server 63 for the WEB page designated by the URL (i.e., HTTP request), the CPU 67 transmits the WEB page data to the management server 63 as the HTTP response.

The management server 63 shown in Fig. 15 has a CPU 71, a ROM 72, a RAM 73 and an HDD 74.

The CPU 71 executes various processes and calculations, and controls the entire operation of the management server 63. According to the third embodiment, the CPU 71 executes the notification request procedure (shown in Fig. 8) and the information output procedure (shown in Fig. 17).

The notification request procedure executed by the CPU 71 will be briefly described. When the management server 63 receives the SSDP from a UPnP device (e.g., the electronic device 11B) newly connected to the network, the CPU 71 obtains the IP address and the device name based on the SSDP. Then the CPU 71 requests the newly connected device to send the fundamental information (e.g., the installation location and the serial number) in accordance with the Device Description of the UPnP. Then, the CPU 71 receives the fundamental information from the newly connected device. Further, the CPU 71 inquires for the Service Description of the UPnP to obtain the service information (e.g., the notification function) which the newly connected electronic device 11B supports.

When the CPU 71 determines that the electronic device 11B supports the notification function, the CPU 71 request the electronic device 11B to send the notification when the status is changed (e.g., when a disorder occurs). It should be noted that the notification request procedure is similar to that executed between the printer 2 and the electronic device 11A in the second embodiment, except that the procedure is executed between the management server 63 and the electronic device 11B. Therefore, the detailed description of the procedure will be omitted.

Next, the information output procedure of the network system 300 according to the third embodiment will be briefly described. When the CPU 71 receives the notification including the URL related to the status change from the UPnP device, the CPU 71 temporarily stores the URL in the RAM 73. Then, the CPU 71 obtains the WEB page from the NVRAM 44 of the electronic device 11B that transmitted the notification, based on the URL temporarily stored in the RAM 73, and transmits the contents of the WEB page (see Fig. 14) to the printer 2. The WEB page is obtained in accordance with the HTTP.

The CPU 71 generates a text (test for the notification mail: see Fig. 8) based on the information via the SSDP, the inquiry for the Description and the notification. The CPU 71 then transmits the text of the notification mail to the system administrator. It should be noted that the notification mail is transmitted only when the e-mail address has been input.

The ROM 72 is a read-only storage, which functions as a part of a main memory of the management server 63. In the ROM 72, various programs including a system program to be executed by the CPU 71 are stored.

The RAM 73 is a volatile readable/writable volatile storage, and also function as a part of the main memory of the management server 63. In the RAM 73, a work area is defined for storing intermediate operation results of data processing.

The HDD 74 is a readable/writable storage. The HDD 74 stores various programs including ones to be by the CPU 71 to perform the notification request procedure (see Fig. 8) and the information output procedure (see Fig. 17). Further, the HDD stores data (e.g., the e-mail address) input by the system administrator through the setting windows as shown in Fig. 11.

It should be noted that the notification request procedure according to the third embodiment is similar to that executed between the printer 2 and the electronic device 11A according to the second embodiment, except that it is executed between the management server 63 and the electronic device 11B.

The interface 75 connects the management server 63 to the LAN 8 so as to enable the management server 63 to communicate with the devices (e.g., the personal computer 3A) connected to the LAN 8.

Next, the information output procedure in the network system 300 will be described with reference to Fig. 17, which shows a flowchart thereof.

In S501, the CPU 67 of the electronic device 11B supporting the notification function determines whether the status of the electronic device 11B has changed in accordance with the detection results of the status detecting unit 45. When the CPU 67 does not determine that the status has changed (5501 : NO), the CPU 67 keeps monitoring the status change of the electronic device 11B. When the CPU 67 determines that the status has changed (S501: YES), control proceeds to S502.

In S502, the CPU 67 of the electronic device 11B generates a notification (see Fig. 12) based on the detection results of the status detecting unit 45 and the table exemplified in Fig. 10, and transmits the notification. The notification is then received by the management server 63.

In S601, when the management server 63 receives the notification from the electronic device 11B whose status has changed, the CPU 71 temporarily stores the URL included in the notification in the RAM 73.

In S602, the CPU 71 obtains the WEB page from the NVRAM 44 of the electronic device 11B that transmitted the notification, based on the URL temporarily stored in the RAM 73 in S601. This process of obtaining the WEB page is performed in accordance with the HTTP request by the management server 63 and the HTTP response by the electronic device 11B.

In S603 , the management server transmits the WEB page data as obtained to the printer 62 under control of the CPU 71.

In S604, the CPU 71 generates status information for the text of the notification print and notification mail based on the DeviceStatusString value and DeviceStatusHelpURL value included in the notification (see Figs. 12 and 13).

In S605, the CPU 71 generates the node information (see Fig. 13) for the text of the notification print and notification mail based on the device name and IP address obtained via the SSDP, and the installation location and serial number obtained via the Device Discovery.

With the process of steps S604 and S605, the text for the notification mail, an example of which is shown in Fig. 13, is generated.

In S606, the CPU 71 determines whether the e-mail address has been input in the input box 36c in the setting window shown in Fig. 11. That is, the CPU 71 determines whether the e-mail address to which the notification mail is sent has been set. When the CPU 71 determines that the e-mail address has been set (S606: YES), control proceeds to S607. When the CPU 71 determines that the e-mail address has not been set (S606: NO), the information output procedure is terminated.

In S607, the CPU 71 transmits the text of the notification mail to the e-mail address set by the system administrator, and terminates the information output procedure. The system administrator recognizes the change of status such as the disorder of the electronic device 11B when the text of the notification mail is received.

In S701, the printer 62 receives the WEB page which is transmitted by the management server 63 in S603.

In S702, the CPU 66 of the printer 62 determines whether the check box 36b for enabling the automatic printing of the WEB page has been checked, that is, the CPU 66 determines whether the setting for the automatic printing of the WEB page has been made. When the automatic print setting has been made (S702: YES), control proceeds to S705. When such a setting has not been made (S702: NO), control proceeds to S703.

In S703 , the CPU 66 of the printer 62 displays a message "TO PRINT WEB PAGE?" on the display unit of the operation panel 25 together with "YES" and "NO" to be selected by the user.

In S704, the CPU 66 determines whether the user selects, with use of the operation panel 25, to print the WEB page. When the CPU 66 determines that the user selects "NO", i.e., the user does not intend to print the WEB page (S704 : NO), the information output procedure is terminated since the WEB page need not be printed. When the user selects to print the WEB page (5704 : YES), control proceeds to S705.

In S705, the CPU 66 of the printer 62 controls the printing unit 24 to print the WEB page (see Fig. 14) received from the management server 63 in S701.

According to the network system 300 described above, the user may obtain the coping method for the changed status of the electronic device without troublesome operations, as in the second embodiment.

It should be noted that the invention is not limited to the above-described exemplary embodiment, and various modification can be made without departing from the scope of the invention. For example, in the above-describe embodiments, the UPnP protocol is employed. Alternatively or optionally, another protocol such as Jini can be employed. Further, as the network system to which the present invention is applied, various network systems such as the wired LAN, wireless LAN, Ethernet, Bluetooth and any other similar systems and/or a combination thereof can be used.

In the above-described embodiment, the WEB page is stored in each electronic devices 11, 11A and 11B. This can be modified such that the WEB pages for some of or all of the electronic devices are stored in an area where the electronic devices share the WEB pages. With such a configuration, the update and/or maintenance of the WEB pages may be simplified. For example, when the WEB page is stored in a management server of a manufacturer of a certain product, and if new supplies and/or new error handling methods are to be announced, only by updating the WEB page at the management server, each printer 2 can print out the contents.

Further, in the above-described embodiments, the contents of the WEB page is printed out using the printer 2 or 62. However, this can be modified such that a part of or all of the contents is displayed on the screen of the display unit. For example, the information output procedure is executed by the personal computer 3A, and the contents of the obtained WEB page may be displayed on the display unit 36.

Incidentally, the network system may be configured such that, when there occurs a change of operation status (e.g., disorder) in the electronic device, a buzzer is automatically sounded and/or an LED (Light Emitting Diode) is lit in order to indicate the status change.

According to the second and third embodiments, when the operation status of the electronic device has changed, link data (i.e., URL) regarding the information to be output is sent to the information output device. Thus, the information output device obtains the information based on the link data, and output the obtained information. Accordingly, the user can obtain the information (e.g., a coping method) regarding the status change of the electronic device without a troublesome operation.

## Claims

1. An information output system including a plurality of electronic devices (11B) connectable to a network system (8), a server (63) and an information output device (62) which are connected to the network system (8), each of the plurality of electronic devices (11B), when connected to the network system (8), the server (63) and the information output device (62) being capable of communicating with each other,
said server (63) comprises:
a detecting system that is adapted to detect whether each of the plurality of electronic device (11B) is connected to the network system (8);
**characterized in that**
each of said plurality of electronic devices (11B) comprises:
a link information storage that is adapted to store link information indicative of a location of data to be output; and
a link information transmitting system that is adapted to transmit the link information to said server when a predetermined condition is satisfied,
said server (63) further comprises:
a link information receiving system that is adapted to receive the link information transmitted by the electronic device (11B) connected to the network system (8); and
a transmitting system that is adapted to transmit the data to be output to said information output device (62), and
said information output device (62) comprises:
a data receiving system that is adapted to receive the data to be output from said server (63); and
an outputting system (24) that is adapted to output the data to be output which is received from the server (63).

2. The information output system according to claim 1,
wherein said server (63) comprises a data requesting system that is adapted to request each electronic device (11B) connected to the network system (8) to transmit data to be output, and
wherein the predetermined condition includes receipt of a request transmitted by said data requesting system.

3. The information output system according to claim 1 or 2, wherein the predetermined condition relates to an operation states of each electronic device (11B).

4. The information output system according to claim 1. 2 or 3,
wherein the link information includes at least one URL, and
wherein said data to be output includes WEB page data.

5. The information output system according to any one of preceding claims, wherein the location where the data to be output is inside each of said plurality of electronic device (11B).

6. The information output system according to any one of claims 1 to 4, wherein the location where the data to be output is in a predetermined device connected to the network system (8).

7. The information output system according to any one of preceding claims, wherein the predetermined condition includes a predetermined change of the operation status of each electronic device (11B).

8. The information output system according to claim 7, wherein the data to be output contains a method of coping with the predetermined condition.

9. The information output system according to any one of preceding claims, wherein said server (63) includes an e-mail transmitting system that is adapted to generate an e-mail message having contents of data to be output and is adapted to transmit the e-mail message to at least a predetermined address.

## Patentansprüche

1. Informationsausgabesystem mit einer Mehrzahl von elektronischen Vorrichtungen (11B), die mit einem Netzwerk (8) verbindbar sind, einem Server (63) und einer Informationsausgabevorrichtung (62), die mit dem Netzwerksystem (8) verbunden sind, wobei jede der Mehrzahl von elektronischen Vorrichtungen (11B), wenn sie mit dem Netzwerksystem (8) verbunden ist, der Server (63) und die Informationsausgabevorrichtung (62) miteinander kommunizieren können,
der Server weist auf:
ein Erfassungssystem, das angepasst ist zum Erfassen, ob jede der Mehrzahl von elektronischen Vorrichtungen (11B) mit dem Netzwerksystem (8) verbunden ist;
**dadurch gekennzeichnet, dass**
jede der Mehrzahl von elektronischen Vorrichtungen (11B) aufweist:
einen Verbindungsinformationsspeicher, der angepasst ist zum Speichern von Verbindungsinformation, die einen Ort von Daten anzeigt, die auszugeben sind; und
ein Verbindungsinformationsübertragungssystem, das angepasst ist zum Übertragen der Verbindungsinformation zu dem Server, wenn eine vorbestimmte Bedingung erfüllt ist,
der Server (63) weist weiter auf:
ein Verbindungsinformationsempfangssystem, das angepasst ist zum Empfangen der Verbindungsinformation, die von der elektronischen Vorrichtung (11B) übertragen ist, die mit dem Netzwerksystem (8) verbunden ist; und
ein Übertragungssystem, das angepasst ist zum Übertragen der Daten, die auszugeben sind, zu der Informationsausgabevorrichtung (62), und
die Informationsausgabevorrichtung (62) weist auf:
ein Datenempfangssystem, das angepasst ist zum Empfangen der Daten, die von dem Server (63)auszugeben sind; und
ein Ausgabesystem (24), das angepasst ist zum Ausgeben der Daten, die auszugeben sind, die von dem Server (63) empfangen sind.

2. Informationsausgabesystem nach Anspruch 1,
bei dem der Server (63) ein Datenanforderungssystem aufweist, das angepasst ist zum Anfordern von jeder elektronischen Vorrichtung (11B), die mit dem Netzwerksystem (8) verbunden ist, Daten zu übertragen, die auszugeben sind, und
bei dem die vorbestimmte Bedingung den Empfang einer Anforderung enthält, die von dem Datenanforderungssystem übertragen ist.

3. Informationsausgabesystem nach Anspruch 1 oder 2, bei dem die vorbestimmte Bedingung sich auf einen Betriebszustand einer jeden elektronischen Vorrichtung (11B) bezieht.

4. Informationsausgabesystem nach Anspruch 1, 2, oder 3
bei dem die Verbindungsinformation mindestens eine URL enthält und
bei dem die Daten, die auszugeben sind, WEB-Seitendaten enthalten.

5. Informationsausgabesystem nach einem der vorhergehenden Ansprüche, bei denen der Ort, an dem die Daten auszugeben sind, innerhalb einer jeden der Mehrzahl von elektronischen Vorrichtungen (11B) ist.

6. Informationsausgabesystem nach einem der Ansprüche 1 bis 4, bei dem der Ort, an dem die Daten auszugeben sind, eine vorbestimmte Vorrichtung ist, die mit dem Netzwerksystem (8) verbunden ist.

7. Informationsausgabesystem nach einem der vorhergehenden Ansprüche, bei dem die vorbestimmte Bedingung eine vorbestimmte Änderung des Betriebszustands einer jeden elektronischen Vorrichtung (11B) enthält.

8. Informationsausgabesystem nach Anspruch 7, bei dem die Daten, die auszugeben sind, ein Verfahren des Fertigwerdens mit der vorbestimmten Bedingung enthalten.

9. Informationsausgabesystem nach einem der vorhergehenden Ansprüche, bei dem der Server (63) ein E-Mail-Übertragungssystem enthält, das angepasst ist zum Erzeugen einer E-Mail-Nachricht mit Inhalten von Daten, die auszugeben sind, und angepasst ist zum Übertragen der E-Mail-Nachricht zu mindestens einer vorbestimmten Adresse.

## Revendications

1. Système de sortie d'informations incluant une pluralité de dispositifs électroniques (11B) connectables à un système de réseau (8), un serveur (63) et un dispositif de sortie d'informations (62) qui sont connectés au système de réseau (8), chacun de la pluralité de dispositifs électroniques (11B), lorsque connecté au système de réseau (8), le serveur (63) et le dispositif de sortie d'informations (62) étant capables de communiquer les uns avec les autres,
ledit serveur (63) comprend :
un système de détection qui est adapté pour détecter si chacun de la pluralité de dispositifs électroniques (11B) est connecté au système de réseau (8) ;
**caractérisé en ce que** chacun de ladite pluralité de dispositifs électroniques (11B) comprend :
un stockage d'informations de liaison qui est adapté pour stocker des informations de liaison indicatives d'un emplacement de données devant être sorties ; et
un système de transmission d'informations de liaison qui est adapté pour transmettre les informations de liaison audit serveur lorsqu'une condition prédéterminée est satisfaite,
ledit serveur (63) comprend en outre :
un système de réception d'informations de liaison qui est adapté pour recevoir les informations de liaison transmises par le dispositif électronique (11B) connecté au système de réseau (8) ; et
un système de transmission qui est adapté pour transmettre les données devant être sorties audit dispositif de sortie d'informations (62), et
ledit dispositif de sortie d'informations (62) comprend :
un système de réception de données qui est adapté pour recevoir les données devant être sorties en provenance dudit serveur (63) ; et
un système de sortie (24) qui est adapté pour sortir les données devant être sorties qui sont reçues en provenance du serveur (63).

2. Système de sortie d'informations selon la revendication 1,
dans lequel ledit serveur (63) comprend un système de demande de données qui est adapté pour demander à chaque dispositif électronique (11B) connecté au système de réseau (8) de transmettre des données devant être sorties, et
dans lequel la condition prédéterminée inclut la réception d'une demande transmise par ledit système de demande de données.

3. Système de sortie d'informations selon la revendication 1 ou 2, dans lequel la condition prédéterminée concerne un état de fonctionnement de chaque dispositif électronique (11B).

4. Système de sortie d'informations selon la revendication 1, 2 ou 3,
dans lequel les informations de liaison incluent au moins une URL, et
dans lequel lesdites données devant être sorties incluent des données de page WEB.

5. Système de sortie d'informations selon l'une quelconque des revendications précédentes, dans lequel l'emplacement où les données doivent être sorties se trouve à l'intérieur de chacun de ladite pluralité de dispositifs électroniques (11B).

6. Système de sortie d'informations selon l'une quelconque des revendications 1 à 4, dans lequel l'emplacement où les données doivent être sorties se trouve dans un dispositif prédéterminé connecté au système de réseau (8).

7. Système de sortie d'informations selon l'une quelconque des revendications précédentes, dans lequel la condition prédéterminée inclut un changement prédéterminé de l'état de fonctionnement de chaque dispositif électronique (11B).

8. Système de sortie d'informations selon la revendication 7, dans lequel les données devant être sorties contiennent un procédé permettant de faire face à la condition prédéterminée.

9. Système de sortie d'informations selon l'une quelconque des revendications précédentes, dans lequel ledit serveur (63) inclut un système de transmission de courrier électronique qui est adapté pour générer un message de courrier électronique ayant un contenu de données devant être sorties et est adapté pour transmettre le message de courrier électronique à au moins une adresse prédéterminée.
